# EUROPÄISCHE PATENTSCHRIFT

(11) **EP 0 369 172 B1**
(45) Veröffentlichungstag und Bekanntmachung des Hinweises auf die Patenterteilung: **10.04.1996**
(21) Anmeldenummer: 89119094.4
(22) Anmeldetag: 13.10.1989
(51) Int. Cl.: D21G 1/02

(54) **Heiz- oder Kühlwalze**
Heated or cooled cylinder
Cylindre chauffé ou refroidi

(30) Priorität: 15.11.1988 DE 3838726
(43) Veröffentlichungstag der Anmeldung: 23.05.1990
(73) Patentinhaber: Schwäbische Hüttenwerke Gesellschaft mit beschränkter Haftung, D-73414 Aalen (DE)
(72) Erfinder: Zaoralek, Heinz-Michael, Dr., D-7923 Königsbronn (DE)
(74) Vertreter: Schwabe - Sandmair - Marx

(56) Entgegenhaltungen:
- EP-A- 0 285 081
- NL-A- 7 908 755
- US-A- 4 050 510

## Beschreibung

Die Erfindung betrifft eine Heiz- oder Kühlwalze der im Oberbegriff des Anspruchs 1 angegebenen Gattung.

Derartige Walzen werden zur Herstellung und Verarbeitung von Materialbahnen, insbesondere Papierbahnen, eingesetzt. Dabei liefern die Walzen einen wesentlichen Beitrag zur Qualität der herzustellenden bzw. zu verarbeitenden Materialbahnen, die insbesondere Papierbahnen sind. So kann es mitunter wünschenswert sein, den Walzenmantel zu beheizen oder zu kühlen, was einen unmittelbaren Einfluß auf das zu bearbeitende Material hat.

Es gibt bereits Walzen mit einem drehbarem äußeren Walzenmantel und einer durchgehenden feststehenden Achse, die sich beheizen lassen.

Die Beheizung der Walze kann intern, nämlich mittels eines fluiden Wärmeträgers, insbesondere Thermoöl, das in den Spalt zwischen Achse und Walzenmantel eingeleitet wird, oder aber extern erfolgen, nämlich insbesondere durch induktive Beheizung.

Der Nachteil von intern beheizten Walzen ist allerdings, daß die Wärme durch den Walzenmantel von innen nach außen fließen muß, die Mantelstärke wegen der erforderlichen mechanischen Festigkeit relativ groß ist und deshalb den Wärmefluß behindert. Werden dem Walzenkörper nun relativ große Wärmemengen zugeführt oder entzogen, so entsteht zwangsläufig ein großer Temperaturgradient von innen nach außen. Um eine bestimmte Oberflächentemperatur beizubehalten, muß die Temperatur des Wärmeträgers entsprechend erhöht oder abgesenkt werden.

Die durch den großen Wärmegradienten hervorgerufene Verspannung des Walzenkörpers verursacht insbesondere im Randbereich der Walze eine Verformung ("Oxbow-Effekt"), so daß dort nur Materialbahnen von geringer Qualität hergestellt werden können.

Bei der Walze nach der US-PS 4 459 726 wird die Wärmeträgerzu- und abfuhr mittels eines speziellen Dichtkopfes und eines besonderen Wälzrollenlagers mit drei Laufringen durchgeführt. Dieser Lösungsvorschlag ist jedoch äußerst aufwendig und läßt sich in der Praxis nicht in wirtschaftlicher Weise realisieren, weshalb derartige Walzen bis zum heutigen Tage nicht zum Einsatz gelangt sind.

Die Erfindung hat demzufolge die Aufgabe, die aufgeführten Nachteile der bekannten Walzen zu vermeiden; insbesondere soll eine Walze der angegebenen Gattung vorgeschlagen werden, die auf konstruktiv einfache und damit praktikable Weise die Zu- und Abfuhr des Wärmeträgers durch die feststehende Achse ermöglicht.

Dies wird erfindungsgmeäß durch die im kennzeichnenden Teil des Anspruchs 1 angegebenen Merkmale erreicht.

Zweckmäßige Ausführungsformen werden durch die Merkmale der Unteransprüche definiert.

Hierbei wird die Zuführung bzw. Abführung des Wärmeträgers so gelöst, daß er über mindestens zwei axiale Leitungen in der feststehenden Achse und mindestens jeweils einen jeder axialen Leitung zugeordneten ersten radialen Kanal in der feststehenden Achse, und über mindestens jeweils einen Ringraum für jeden ersten radialen Kanal zwischen dem Walzenmantel und der feststehenden Achse sowie über zweite radiale, mit den Bohrungen verbundene Kanäle im Walzenmantel den als Bohrungen ausgebildeten peripheren, axialparallelen Durchgängen zugeleitet wird.

Der Ringraum bzw. die Ringraume sind nach außen durch den Walzenmantel oder eine daran befestigte Verlängerung und nach innen durch die feststehende Achse begrenzt. Dichtungen, wie z.B. Labyrinthdichtungen, dichten den bzw. die Ringraume sowohl zum außenliegenden Wälzlager als auch zum inneren Ringspalt mit den Lagerelementen ab.

Für diese Anwendungen brauchen die Dichtungen keinen besonders hohen Dichtigkeitsanforderungen zu genügen. Relativ hohe Leckraten sind tolerierbar. Bei einigen Anwendungen sind gewisse, definierte Leckraten erwünscht, um bestimmte Wirkungen zu erzielen.

Der Ringspalt zwischen dem äußeren Mantel und der feststehenden Achse, in dem die Lagerelemente angeordnet sind, ist teilweise mit einer Hydraulikflüssigkeit gefüllt, wie sie auch als Wärmeträger eingesetzt wird. Ist die Leckrate auf eine Größenordnung von ca. 20 % eingestellt, so wäre beim Anfahren der Walze eine gleichmäßige Aufheizung des Walzenmantels und der Achse gewährleistet, was zu minimierten Verschleißerscheinungen führt.

Der ringförmige Zwischenraum zwischen den Dichtungen, jenseits des von dem Wärmeträgermedium durchströmten Ringraumes, könnte mit gekühltem Wärmeträgermedium gespült werden, um das außenliegende Wälzlager auf diese Weise vor Überhitzung zu schützen.

Von dem Ringraum, der für die Zuleitung des Wärmeträgers eingerichtet ist, leiten Bohrungen oder Kanäle den Wärmeträger zu den peripheren Bohrungen im Walzenmantel.

Durch einen baugleichen Ringraum am gegenüberliegenden anderen Ende der Walze kann der Wärmeträger wieder in eine Bohrung der feststehenden Achse eingeleitet und nach außen abgeführt werden.

Eine entsprechende Einrichtung ist auch für die Leckageflüssigkeit aus dem Ringspalt mit den Lagerelementen vorgesehen.

Zweckmäßigerweise wird der Wärmeträger durch die gesamte Achse geführt, um beim Hochbzw. Herunterfahren der Betriebstemperatur den Walzenmantel und die Achse gleichmäßig zu erwärmen bzw. zu kühlen.

Die peripheren Bohrungen können an den Enden auch so verbunden werden, daß der Wärmeträger jeweils in benachbarte periphere, axialparallele Bohrungen übergeleitet werden kann. Bei entsprechender Ausgestaltung ist der Ringraum zu teilen und mit Bohrungen oder Kanälen zu versehen, die abwechselnd mit benachbarten peripheren Bohrungen verbunden sind. Der Wärmeträger kann auch durch jeweils drei oder noch mehr benachbarte periphere Bohrungen hindurchströmen, bevor er in die Achse zurückgeleitet wird.

Das mehrfache Durchleiten des Wärmeträgers durch den Walzenmantel ermöglicht es, pro Zeiteinheit geringere Mengen an Wärmeträger durch die Walze hindurchzuleiten, ohne daß es zu einem schlechteren Wärmeübergang von dem Wärmeträger auf den Walzenmantel, hervorgerufen durch geringere Strömungsgeschwindigkeiten, kommt. Auch ein Temperaturabfall in axialer Richtung wird vermieden.

Durch die beschriebenen Maßnahmen lassen sich die erforderlichen Oberflächentemperaturen mit niedrigeren bzw. höheren Temperaturen des Wärmeträgers erreichen, je nach dem ob die Walze beheizt oder gekühlt wird.

Denn da die Wärme nunmehr einen kürzeren Weg von den peripheren Bohrungen zur Walzenoberfläche zurücklegen muß, kann in der erfindungsgemäßen Walze die Temperatur des fluiden Wärmeträgers bei gleichbleibender Oberflächentemperatur gesenkt werden. Um z.B. eine Walzenoberflächentemperatur von 160°C zu erreichen, muß der Wärmeträger nur noch eine Temperatur von 192°C aufweisen. Bei der herkömmlichen Ausgestaltung wäre eine Temperatur des Wärmeträgers von 224°C erforderlich.

Die Absenkung des Temperaturniveaus des Wärmeträgers hat unter anderem den Vorteil, daß Wärmeträger mit geringerer Wärmebeständigkeit verwendet werden können und die Lebensdauer des Wärmeträgers, die von der Temperatur abhängig ist, entscheidend verlängert werden kann. Außerdem kann bei gleichbleibender Temperatur des Wärmeträgers eine höhere Oberflächentemperatur erzielt werden. Daher sind die Energieeinsparungen beträchtlich. Zudem werden die thermischen Spannungen und Verformungen ("Oxbow-Effekt"), die um so größer sind, je größer der Temperaturgradient ausfällt, verringert, wodurch die Materialbahnen auch im Randbereich der Walze die erforderliche Qualität erhalten. Schließlich ist es möglich, Wärmequellen mit einer niedrigeren Ausgangstemperatur (z.B. Dampf) zur Aufheizung des Wärmeträgers zu verwenden.

Die Erfindung wird im folgenden anhand von Ausführungsbeispielen unter Bezugnahme auf die beiliegenden, schematischen Zeichnungen näher erläutert. Es zeigen
- Fig. 1: einen vertikalen Schnitt durch ein Ende einer ersten Ausführungsform einer Walze, und
- Fig. 2: einen vertikalen Schnitt durch ein Ende einer weiteren Ausführungsform einer Walze.

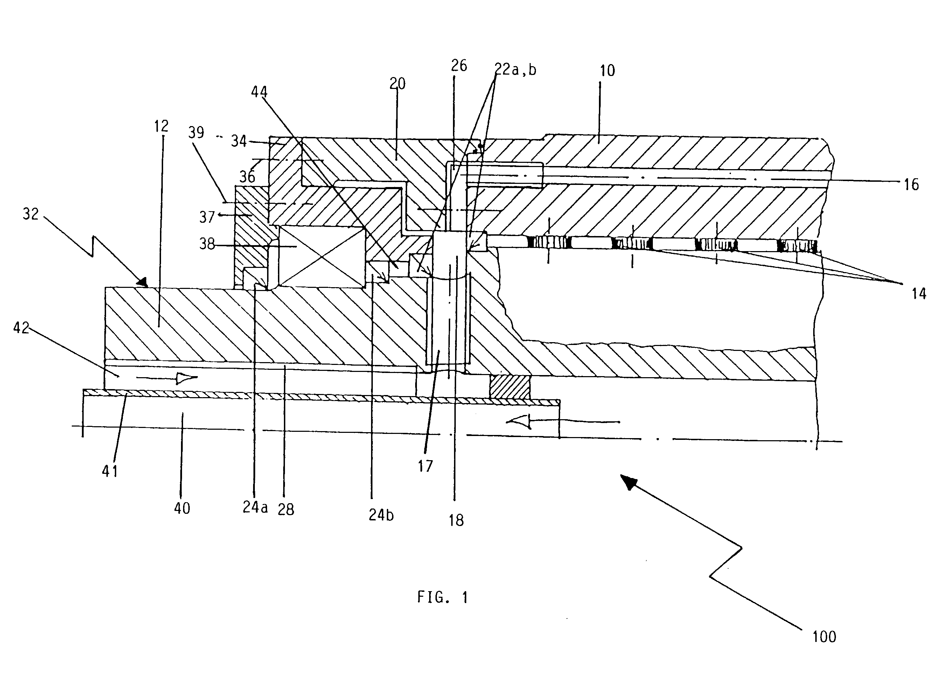

Die allgemein durch das Bezugszeichen 100 in Figur 1 angedeutete Kühloder Heizwalze weist einen rohrförmigen Walzenmantel 10 mit einer solchen Wandstärke auf, daß seine mechanische Stabilität im Betrieb gewährleistet ist. Einstückig mit dem Walzenmantel 10 ist eine ebenfalls rohrförmige Verlängerung 20 ausgeführt, deren Außendurchmesser in etwa dem Außendurchmesser des Walzenmantels 10 entspricht und dessen Innendurchmesser sehr viel kleiner als der Innendurchmeser des Walzenmantels 10 ist, so daß sich ein buchsenförmiger Endbereich ergibt.

Der Walzenmantel 10 ist auf einer feststehenden, hohlen Achse 12 durch hydrostatisch und/oder hydrodynamisch wirkende Lagerelemente 14 gelagert, die gleichmäßig über die Länge des Walzenmantels 10 verteilt angeordnet sind.

Ein Lagerflansch 34 ist an einem Ende durch Schrauben 36 an der Stirnseite der Verlängerung 20 befestigt. Der Lagerflansch 34 dreht sich also mit dem Walzenmantel 10 auf der stationären Achse 12; deshalb ist ein Ringlager 38 zwischen dem Endbereich der Achse 12 und dem mittleren Teil des Lagerflansches 34 angeordnet.

Ein Stirnflansch 37 ist durch Schrauben 39 an der freiliegenden Stirnfläche des Lagerflansches 34 angebracht und liegt radial innen auf der Achse auf. Eine Dichtung 24a befindet sich zwischen dem Innenrand des Stirnflansches 37 und der Achse 12.

Durch den Walzenmantel 10 verlaufen mehrere axialparallele Bohrungen 16 in der Nähe der Manteloberfläche.

Die durchgehende, stationäre Achse 12 ist in den Bereichen der beiden Walzenenden 32 mit mindestens einem radial Kanal 17 versehen, der in einen Ringraum 18 mündet. Diese Ringräume 18 sind auf der Zuführungs-/ Rückführungsseite einer Quelle, von der aus der Walzenmantel 10 mit einem Wärmeträger ver- bzw. entsorgt wird, über die Versorgungsleitung 42 in der Achse 12 und radiale Kanäle 26 in dem Mantel 10 mit den peripheren axialparallelen Bohrungen 16 verbunden.

Auf der von der Versorgungsleitung 42 abgewandten Seite der Kühl- oder Heizwalze 100 sind die axialparallelen, peripheren Bohrungen 16 mit einem baugleich ausgebildeten Hohlraum 18 verbunden, der wiederum an eine Entsorgungsleitung 40 angeschlossen ist, die den benutzten Wärmeträger wieder durch die feststehende Achse 12 hindurch aus der Walze 100 ableitet. Die beiden Leitungen 40, 42 in der Achse 12 sind durch ein Rohr 41 voneinander getrennt.

Jeder Ringraum 18 wird radial außen durch den Mantel 10 bzw. die Verlängerung 20, radial innen durch die Achse 12, axial innen durch eine Stirnwand der Achse 12 sowie axial außen durch den Lagerflansch 34 begrenzt und ist mit Dichtungen 22a und 22b, insbesondere Labyrinth-Dichtungen, versehen. Zum Walzenende hin sorgen weitere Dichtungen 24a und 24b dafür, daß der Wärmeträger bzw. Lageröl nicht austreten kann.

An die Dichtungen 22b müssen keine hohen Anforderungen gestellt werden, da Leckagen toleriert werden können. Der Ringpalt mit den Lagerelementen 14 ist zumindest teilweise mit einer Hydraulikflüssigkeit identischer Beschaffenheit wie der fluide Wärmeträger gefüllt; eine Leckage in der Größenordnung von etwa 20 % wäre sogar von Vorteil für die gleichmäßige Aufheizung des Walzenmantels 14 und der Achse 12 beim Anfahren der Walze 100.

Um die Wälzlager 38 nicht unnötig thermisch zu belasten, werden sie durch rohrförmige Wärmeisolierungen 28 in der Achse 12 vom restlichen Walzenkörper wärmetechnisch getrennt. Als weitere Maßnahme kann der ringförmige Zwischenraum 44, der sich zwischen den Dichtungen 22a und 24b befindet, von einer Kühlflüssigkeit durchströmt werden, die aus gekühltem Wärmeträgermedium besteht.

Im folgenden soll die Funktionsweise der Ausführungsform gemäß Figur 1 erläutert werden.

Während der Inbetriebnahme der Walze 100 wird durch die Versorgungsleitung 42 in der Achse 12 der Wärmeträger über den Kanal 17, den Ringraum 18 und die Kanäle 26 in die peripheren, axialparallelen Bohrungen 16 eingeleitet. Am anderen Walzenende wird das gebrauchte Wärmeträgermedium wieder durch Kanäle 26, einen entsprechenden Ringraum 18 und den radialen Kanal 17 in die die Achse 12 durchlaufende Entsorgungsleitung 40 eingeleitet, durch die der benutzte Wärmeträger die Walze 100 wieder verläßt.

Bei diesem Vorgang sorgt eine definierte Leckrate, die durch die Dichtungen 22b bestimmt wird, dafür, daß auch der Ringraum mit den Stützelementen 14 permanent mit dem Wärmeträger versorgt wird, wodurch eine gleichmäßige Aufheizung bzw. eine gleichmäßige Temperatur der gesamten Walzen 100 gewährleistet ist.

Bei diesem Vorgang wird die Temperatur des Wärmeträgers so eingestellt, daß die Betriebstemperatur der Walze 100 möglichst schnell erreicht und dann auf der Solltemperatur gehalten wird. Während des Aufheizvorganges kann der Walzenmantel 10 bereits auf seine spätere für den Betrieb notwendige Rotationsgeschwindigkeit beschleunigt werden.

Um die Wälzlager 38 zu schonen, können während des gesamten Betriebes die Ringräume 44 mit Kühlflüssigkeit durchströmt werden, um sie vor dem Heißlaufen zu schützen.

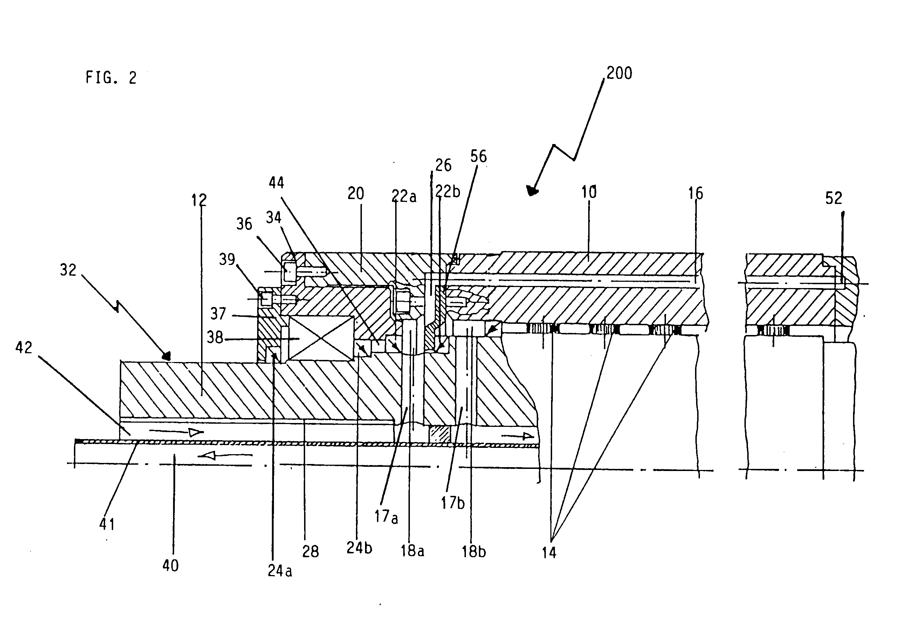

Die aus Figur 2 ersichtliche, allgemein durch das Bezugszeichen 200 angedeutete zweite Ausführungsform einer Walze entspricht im wesentlichen der Ausführungsform nach Figur 1.

Der wesentliche Unterschied zwischen den beiden Ausführungsformen ist, daß die peripheren Bohrungen 16 an den Enden 52 jeweils paarweise so miteinander verbunden sind, daß der Wärmeträger quasi durch eine Heiz- oder Kühl-Schleife fließt. Dabei wird der Wärmeträger durch eine radiale Bohrung 17a und einen Ringraum 18a eingespeist und durch einen weiteren Ringraum 18b und eine radiale Bohrung 17b aus dem äußeren, drehbaren Walzenmantel 10 herausgeführt. Die Ringräume 18a und 18b entstehen durch eine Unterteilung des ursprünglich aus Figur 1 hervorgehenden Ringraumes 18, unter Verwendung eines Einsatzes 56.

Es ist auch möglich, noch mehr als zwei benachbarte, axialparallele, periphere Bohrungen 16 miteinander zu einer Heizschleife zu verbinden (nicht dargestellt).

Das mehrfache Durchleiten des Wärmeträgers durch die axialparallelen Bohrungen 16 in dem Mantel 10 hat den Vorteil, daß der Volumenstrom des Wärmeträgers reduziert werden kann, ohne daß sich dadurch der Wärmeübergang von dem Wärmeträger auf den Walzenmantel 10 durch geringere Strömungsgeschwindigkeit verringert und es damit zu einem Temperaturabfall in axialer Richtung kommt. Bei dreifachem Durchströmen des Wärmeträgers kann bspw. der Volumenstrom stark verringert werden, wobei sich der Wärmeträger während des Durchlaufs z. B. um etwa 6°C abkühlt, ohne daß eine stärkere Temperaturdifferenz in axialer Richtung an der Walzenoberfläche gemessen werden konnte.

Würde ein entsprechender Volumenstrom nur einmal durch die Walze 100 oder 200 geführt, so würde sich dies in einem entsprechenden Temperaturabfall von einem Ende der Walze 200 zum anderen bemerkbar machen.

## Patentansprüche

1. Heiz- oder Kühlwalze
a) mit einer feststehenden Achse (12), und
b) mit mindestens einem hydrostatischen oder hydrodynamischen Lagerelement (14) zur Abstützung eines drehbaren Walzenmantels (10) auf der feststehenden Achse (12),
c) wobei der Walzenmantel (10) mit peripheren axialparallelen Durchgängen (16) versehen ist,
d) durch welche ein heiz- oder kühlbarer Wärmeträger hindurchleitbar ist,
**dadurch gekennzeichnet,** daß
e) die peripheren, axialparallelen Durchgänge Bohrungen (16) sind, denen der Wärmeträger
e1) über mindestens zwei axiale Leitungen (40, 42) in der feststehenden Achse (12) und mindestens jeweils einen jeder axialen Leitung zugeordneten ersten radialen Kanal (17) in der feststehenden Achse (12),
e2) über mindestens jeweils einen Ringraum (18) für jeden ersten radialen Kanal (17) zwischen dem Walzenmantel (10) und der feststehenden Achse (12), und
e3) über zweite radiale, mit den Bohrungen (16) verbundene Kanäle (26) im Walzenmantel (10)
zu- bzw. abführbar ist.

2. Walze nach Anspruch 1, dadurch gekennzeichnet, daß mindestens eine, als Einlauf dienende periphere, axialparallele Bohrung (16) mit einer weiteren peripheren, axialparallelen Bohrung (16) verbunden ist, die als Rücklauf dient, so daß eine mindestens einschleifige Kühl- bzw. Heizschleife entsteht.

3. Walze nach den Ansprüchen 1 und/oder 2, dadurch gekennzeichnet, daß der Ringraum (18) durch Dichtungen (22a, 22b) zwischen dem Mantel (10) und der Achse (12) begrenzt wird.

4. Walze nach den Ansprüchen 1 und 3 und/oder 2, dadurch gekennzeichnet, daß die Dichtungen (22b) eine bestimmte, erwünschte Leckrate zum Ringspalt zwischen der feststehenden Azchse (12) und dem drehbaren Walzenmantel (10) aufweisen.

5. Walze nach einem der Ansprüche 1 bis 4, dadurch gekennzeichnet, daß der Wärmeträger mindestens einmal durch die peripheren Bohrungen (16), die von einer Seite zur anderen Seite der Walze verlaufen, hin- und hergeleitet wird, bevor er über ein oder mehrere Ringräume (18) wieder in die feststehende Achse (12) zurückgelenkt wird.

6. Walze nach einem der Ansprüche 1 bis 5, dadurch gekennzeichnet, daß der abfließende Wärmeträger eine zentrale Innenbohrung (40) der Achse (12) bespült.

7. Walze nach einem der Ansprüche 1 bis 6, dadurch gekennzeichnet, daß an den Stellen, an denen ein Wärmeübergang vom Wärmeträger auf die Walze, oder umgekehrt, nicht erwünscht ist, insbesondere im Bereich des außenliegenden Wälzlagers (38), Wärmeisolierungen (28) vorgesehen werden.

## Claims

1. A heating or cooling roller comprising
a) a stationary axle (12) and
b) at least one hydrostatic or hydrodynamic bearing element (14) to support a rotary roller shell (19) on said stationary axle (12)
c) said roller shell (10) being provided with peripheral, axially parallel orifices (16),
d) through which a heatable or coolable heat transfer medium can be flowed,
**characterized in** that
e) the peripheral, axially parallel orifices are bores (16) to which the heat transfer medium is suppliable and removable
e1) via at least two axial conduits (40, 42) in said stationary axle (12) and at least one each first radial channel (17) in the stationary axle (12) allocated to each axial conduits,
e2) via at least one annular space (18) each for each first radial channel (17) between the roller shell (10) and the stationary axle (12), and
e3) via two radial channels (26) in the roller shell (10) and connected with the bores (16).

2. A roller according to claim 1, characterized in that at least one peripheral, axially parallel bore (16) serving as an inlet is connected to another peripheral, axially parallel bore (16) serving as the return line so that a cooling or heating cycle with at least one loop is formed.

3. A roller according to claim 1 and/or 2, characterized in that the annular space (18) is confined by seals (22a, 22b) between the shell (10) and the axle (12).

4. A roller according to claims 1 and 3, and/or 2, characterized in that the seals (22b) have a defined, desired leak rate toward the annular gap between the stationary axle (12) and the rotatable roller shell (10).

5. A roller according to one of the claims 1 to 4, characterized in that the heat transfer medium is routed back and forth at least once through the peripheral bores (16) which extend from one side to the other side of the roller before it is again returned to the stationary axle (12) via one or more annular spaces (18).

6. A roller according to one of the claims 1 to 5, characterized in that the discharged heat transfer medium flushes a central internal bore (40) of the axle (12).

7. A roller according to claims 1 to 6, characterized in that at the points at which a heat transfer from the heat transfer medium to the roller, or vice versa, is not desired, especially in the area of the external rolling bearing (38), thermal insulators (28) are disposed.

## Revendications

1. Cylindre chauffé ou refroidi
a) avec un axe fixe (12) et
b) avec au moins un élément de palier hydrostatique ou hydrodynamique (14) pour supporter une enveloppe de cylindre (10) tournante sur l'axe fixe (12),
c) dans lequel l'enveloppe de cylindre (10) est munie de passages périphériques (16) parallèles à l'axe,
d) à travers lesquels un fluide caloporteur apte à être chauffé ou refroidi peut être amené à circuler,
caractérisé en ce que
e) les passages périphériques (16) parallèles à l'axe sont des perçages à travers lesquels le fluide caloporteur peut être amené et respectivement évacué
e1) par au moins deux conduits axiaux (40,42) dans l'axe fixe (12) et au moins un premier canal radial (17) dans l'axe fixe (12) associé à chacun des conduits axiaux,
e2) par au moins une chambre annulaire (18) pour chaque premier canal radial (17) entre l'enveloppe de cylindre (10) et l'axe fixe (12), et
e3) par de deuxièmes canaux radiaux (26) dans l'enveloppe de cylindre (10) communiquant avec les perçages (16).

2. Cylindre selon la revendication 1, caractérisé en ce que au moins un perçage périphérique (16) parallèle à l'axe et servant à l'admission communique avec un autre perçage périphérique (16) parallèle à l'axe, qui sert de retour, de sorte que l'on obtient un circuit fermé de chauffage et respectivement de refroidissement à au moins une boucle.

3. Cylindre selon les revendications 1 et/ou 2, caractérisé en ce que la chambre annulaire (18) est délimitée par des joints d'étanchéité (22a, 22b) entre l'enveloppe (10) et l'axe (12).

4. Cylindre selon les revendications 1 et 3 et/ou 2, caractérisé en ce que les joints d'étanchéité (22b) présentent un taux de fuite déterminé, souhaité, par rapport à l'espace annulaire entre l'axe fixe (12) et l'enveloppe de cylindre tournante (10).

5. Cylindre selon l'une des revendications 1 à 4, caractérisé en ce que le fluide caloporteur est amené à circuler en va et vient au moins une fois à travers les perçages périphériques (16) qui s'étendent d'un côté à l'autre du cylindre avant d'être renvoyé à nouveau dans l'axe fixe (12) par une ou plusieurs chambres annulaires (18).

6. Cylindre selon l'une des revendications 1 à 5, caractérisé en ce que le fluide caloporteur sortant passe par un alésage central (40) de l'axe (12).

7. Cylindre selon l'une des revendications 1 à 6, caractérisé en ce que aux emplacements auxquels un transfert thermique du fluide caloporteur au cylindre, ou inversement, n'est pas souhaité, en particulier dans la zone du palier de roulement extérieur (38) des isolations thermiques (28) sont prévues.
